# EUROPÄISCHE PATENTSCHRIFT

(11) **EP 2 092 170 B1**
(45) Veröffentlichungstag und Bekanntmachung des Hinweises auf die Patenterteilung: **09.06.2010**
(21) Anmeldenummer: 07822381.5
(22) Anmeldetag: 08.11.2007
(51) Int. Cl.: F01N 3/20, F01N 11/00, B01D 53/90

(54) **VERFAHREN ZUM BETREIBEN EINES REAGENZMITTEL-DOSIERVENTILS UND VORRICHTUNG ZUR DURCHFÜHRUNG DES VERFAHRENS**
METHOD FOR OPERATING A REAGENT METERING VALVE AND APPARATUS FOR CARRYING OUT THE METHOD
PROCÉDÉ D'EXPLOITATION D'UNE SOUPAPE DE DOSAGE DE RÉACTIF, ET DISPOSITIF POUR LA MISE EN OEUVRE DU PROCÉDÉ

(30) Priorität: 14.11.2006 DE 102006053485
(43) Veröffentlichungstag der Anmeldung: 26.08.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2007/062079
(87) Internationale Veröffentlichungsnummer: WO 2008/058896

(56) Entgegenhaltungen:
- DE-A1- 10 322 155

## Beschreibung

### Stand der Technik

Die Erfindung geht aus von einem Verfahren zum Betreiben eines Reagenzmittel-Dosierventils und von einer Vorrichtung zur Durchführung des Verfahrens nach der Gattung der unabhängigen Ansprüche.

Gegenstand der vorliegenden Erfindung sind auch ein Steuergerätprogramm sowie ein Steuergerät-Programmprodukt.

In der DE 199 03 439 A1 ist ein Verfahren zum Betreiben einer Brennkraftmaschine beschrieben, in deren Abgasbereich ein SCR-Katalysator (Selective-Catalytic-Reduction) angeordnet ist, der die im Abgas der Brennkraftmaschine enthaltenen Stickoxide mit einem Reagenzmittel zu Stickstoff reduziert. Die Dosierung des Reagenzmittels oder einer Vorstufe des Reagenzmittels erfolgt vorzugsweise in Abhängigkeit von Betriebskenngrößen der Brennkraftmaschine, wie beispielsweise der Drehzahl und der eingespritzten Kraftstoffmenge. Weiterhin erfolgt die Dosierung vorzugsweise in Abhängigkeit von Abgas-Kenngrößen, wie beispielsweise der Abgastemperatur oder der Betriebstemperatur des SCR-Katalysators. Als Reagenzmittel ist beispielsweise das Reduktionsmittel Ammoniak vorgesehen, das aus einer Harnstoff-Wasser-Lösung gewonnen werden kann. Die Dosierung des Reagenzmittels oder von Ausgangsstoffen des Reagenzmittels muss sorgfältig festgelegt werden. Eine zu geringe Dosierung hat zur Folge, dass Stickoxide im SCR-Katalysator nicht mehr vollständig reduziert werden können. Eine zu hohe Dosierung führt zu einem Reagenzmittelschlupf, der einerseits zu einem unnötig hohen Reagenzmittelverbrauch und andererseits, in Abhängigkeit von der Beschaffenheit des Reagenzmittels, zu einer unangenehmen Geruchsbelästigung führen kann.

Die Festlegung des Soll-Durchflusses bzw. der Dosiermenge kann gemäß der EP 1 024 254 A2 ausgehend von einer Betriebsgröße der Brennkraftmaschine, beispielsweise der Kraftstoff-Einspritzmenge und/oder der Drehzahl und gegebenenfalls wenigstens einer Kenngröße des Abgases, beispielsweise der Abgastemperatur, erfolgen.

In der DE 10 2004 031 624 A1 ist ein Verfahren zum Betreiben eines zur Reinigung des Abgases einer Brennkraftmaschine verwendeten SCR-Katalysators beschrieben, bei dem eine Steuerung oder Regelung des Reagenzmittel-Füllstands im SCR-Katalysator auf einen vorgegebenen Speichersollwert vorgesehen ist. Die gezielte Vorgabe des Speichersollwerts stellt einerseits sicher, dass in instationären Zuständen der Brennkraftmaschine eine ausreichende Reagenzmittelmenge zur möglichst vollständigen Beseitigung der NOx-Rohemissionen der Brennkraftmaschine zur Verfügung steht und dass andererseits ein Reagenzmittelschlupf vermieden wird. Der Reagenzmittel-Füllstand des SCR-Katalysators wird anhand eines Katalysatormodells ermittelt, das den in den SCR-Katalysator einströmenden NOx-Massenstrom, den den SCR-Katalysator verlassenden NOx-Massenstrom, die Katalysatortemperatur sowie gegebenenfalls den Reagenzmittelschlupf berücksichtigt. Der maximal mögliche Reagenzmittel-Füllstand des SCR-Katalysators hängt insbesondere von der Betriebstemperatur des SCR-Katalysators ab, welcher bei geringen Betriebstemperaturen am höchsten ist und mit zunehmender Betriebstemperatur zu kleineren Werten abfällt. Der Wirkungsgrad des SCR-Katalysators hängt von der katalytischen Aktivität ab, die bei geringen Betriebstemperaturen gering ist, mit steigender Betriebstemperatur ein Maximum durchläuft und mit weiter zunehmender Betriebstemperatur wieder absinkt.

Das Reagenzmittel oder eine Vorstufe des Reagenzmittels wird mit einem Dosierventil dosiert, das beispielsweise unmittelbar an einem Abgaskanal der Brennkraftmaschine angeordnet sein kann. Aus Gründen der mechanischen Zuverlässigkeit des Dosierventils und im Hinblick auf einen beschleunigten Alterungsvorgang des Reagenzmittels und der gegebenenfalls damit verbundenen Korrosionsneigung kann eine Kühlung des Dosierventils vorgesehen sein. Eine derartige Kühlung ist in der DE 44 36 397 A1 bebeschrieben, die einen in den Kühlwasserkreislauf einer Brennkraftmaschine eingebundenen Kühlmantel vorsieht, welcher das Dosierventil umgibt.

In der DE 103 22 155 A1 ist eine Vorgehensweise zur Kühlung eines Reagenzmitteldosierventils beschrieben, bei dem in hohen Lastzuständen der Brennkraftmaschine, in denen mit einer hohen Abgastemperatur zu rechnen ist, und in Abhängigkeit von der aktuellen Reagenzmittel-Dosierung, zusätzlich zur normalen Dosierung ein Überschuss an Reagenzmittel dosiert wird, um eine ausreichende Kühlung eines der hohen Abgastemperatur ausgesetzten Dosierventils zu erreichen.

Der Erfindung liegt die Aufgabe zugrunde, die Kühlung eines Dosierventils an das Kühlerfordernis möglichst genau anzupassen.

### Offenbarung der Erfindung

Die erfindungsgemäße Vorgehensweise mit den Merkmalen des unabhängigen Verfahrensanspruchs weist den Vorteil auf, dass die Kühlung des Dosierventils mit vorhandenen Mitteln durchgeführt wird, sodass keine zusätzlichen Kosten entstehen. Vorteile ergeben sich hierdurch insbesondere in der Serienfertigung einer Anordnung, in welcher das erfindungsgemäße Verfahren abläuft.

Die erfindungsgemäße Vorgehensweise realisiert kostengünstig einen Bauteileschutz. Insbesondere wird vermieden, dass das zu dosierende Reagenzmittel bzw. die Vorstufe des Reagenzmittels hohen Temperaturen ausgesetzt wird.

Die erfindungsgemäße Vorgehensweise baut auf der normalen Dosierung des Reagenzmittels auf. Zum Vermeiden einer Übertemperatur ist eine Kühlung vorgesehen ist, wobei in Dosierpausen der normalen Dosierung bedarfsweise eine gezielt vorgegebe ne Minimalmenge zur Kühlung des Dosierventils dosiert wird, wobei die Dosierung zur Kühlung jedoch nur vorgenommen wird, wenn das Fahrzeug, in welchem die Brennkraftmaschine als Antriebsmotor eingesetzt ist, eine Minimalgeschwindigkeit unterschreitet.

Bei höheren Fahrgeschwindigkeiten oberhalb der Minimalgeschwindigkeit wird von einer ausreichenden Kühlung ausgegangen. Mit der erfindungsgemäßen Maßnahme wir ein Minimum an zusätzlichem Reagenzmittel zur Kühlung benötigt.

Die Minimalmenge ist derart festgelegt, dass selbst bei einem maximalen Reagenzmittel-Füllstand im Katalysator und somit einer Überdosierung kein nennenswerter Reagenzmittel-Durchbruch auftritt. Die Minimalmenge wird im Rahmen einer Applikation ermittelt und entsprechend vorgegeben. Experimentell wurde anhand eines konkreten SCR-Katalysators festgestellt, dass dies bei einer Minimalmenge der Fall ist, die kleiner als 10 % der maximalen Dosiermenge ist, wobei aber dennoch eine ausreichende Kühlwirkung erzielt wird.

Vorteilhafte Weiterbildungen und Ausgestaltungen der erfindungsgemäßen Vorgehensweise ergeben sich aus abhängigen Ansprüchen.

Unterschiedliche Ausgestaltungen sehen vor, dass die Minimalmenge nur unter bestimmten Voraussetzungen in Dosierpausen der normalen Dosierung dosiert wird. Eine erste Ausgestaltung sieht vor, dass die Minimalmenge nur dosiert wird, wenn eine Regeneration eines Speicher-Katalysators und/oder eines Partikelfilters stattfindet. Eine zusätzliche oder alternative Ausgestaltung sieht vor, dass die Minimalmenge nur dosiert wird, wenn die Umgebungstemperatur einen Umgebungstemperatur-Schwellenwert überschreitet. Eine weitere zusätzliche oder alternative Ausgestaltung sieht vor, dass die Minimalmenge nur dosiert wird, wenn ein Maß für die Dosierventiltemperatur einen Dosierventiltemperatur-Schwellenwert überschreitet. Die einzelnen

Ausgestaltungen können in jedem Fall "oder" -verknüpft und zum Teil auch "und" -verknüpft sein. Durch die Berücksichtigung wenigstens einer dieser Ausgestaltungen wird eine unnötige Dosierung der Minimalmenge verhindert.

Eine Ausgestaltung sieht vor, dass das Maß für die Dosierventil-Temperatur in Abhängigkeit von wenigstens einer Betriebsgröße der Brennkraftmaschine und/oder einer Kenngröße des Abgases ermittelt wird.

Alternativ oder ergänzend kann vorgesehen sein, dass das Maß für die Dosierventil-Temperatur in Abhängigkeit von einem Temperatursignal ermittelt wird, welches von einem im Abgasbereich angeordneten Temperatursensor bereitgestellt wird.

Weiterhin kann alternativ oder ergänzend vorgesehen sein, dass das Maß für die Dosierventiltemperatur in Abhängigkeit von einem erfassten Innenwiderstand des als Magnetventil realisierten Dosierventils ermittelt wird.

Die einzelnen Ausgestaltungen betreffend Ermittlung des Maßes für die Dosierventil-Temperatur ermöglichen eine Berücksichtigung der tatsächlichen Temperaturverhältnisse zumindest im Bereich des Dosierventils, wodurch eine unnötige Dosierung der Minimalmenge vermieden werden kann.

Gemäß einer vorteilhaften Festlegung ist vorgesehen, dass die Minimalmenge auf eine Menge begrenzt wird, die kleiner 10 % der maximalen Dosiermenge ist. Die Begrenzung der Minimalmenge auf den angegebenen minimalen Wert stellt sicher, dass selbst bei hohen Betriebstemperaturen im Abgasbereich, insbesondere im SCR-Katalysator, der das Reagenzmittel insbesondere zur Umsetzung einer NOx-Emission der Brennkraftmaschine benötigt, nicht zu einem Entstehen von Distickstoffoxid (Lachgas) führt.

Die erfindungsgemäße Vorrichtung zur Durchführung des Verfahrens betrifft zunächst ein Steuergerät, das zur Durchführung des Verfahrens speziell hergerichtet ist.

Das Steuergerät enthält vorzugsweise wenigstens einen elektrischen Speicher, in welchem die Verfahrensschritte als Steuergerätprogramm abgelegt sind.

Das erfindungsgemäße Steuergerätprogramm sieht vor, dass alle Schritte des erfindungsgemäßen Verfahrens ausgeführt werden, wenn es in einem Steuergerät abläuft.

Das erfindungsgemäße Steuergerät-Programmprodukt mit einem auf einem maschinenlesbaren Träger gespeicherten Programmcode führt das erfindungsgemäße Verfahren aus, wenn das Programm in einem Steuergerät ausgeführt wird.

Weitere vorteilhafte Weiterbildungen und Ausgestaltungen der erfindungsgemäßen Vorgehensweise ergeben sich aus der folgenden Beschreibung.

Die Figur zeigt ein technisches Umfeld, in welchem ein erfindungsgemäßes Verfahren abläuft.

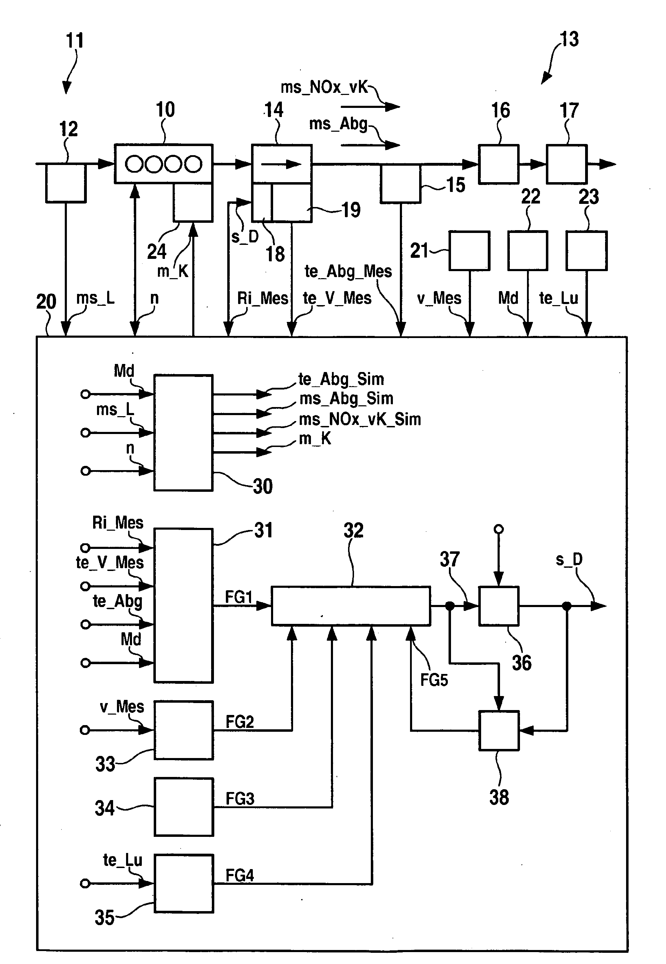

Figur 1 zeigt eine Brennkraftmaschine 10, in deren Ansaugbereich 11 eine Lufterfassung 12 und in deren Abgasbereich 13 eine Dosiervorrichtung 14, ein Abgas-Temperatursensor 15, ein Katalysator 16 sowie ein Partikelfilter 17 angeordnet sind.

Im Abgasbereich tritt ein Abgas-Massenstrom ms_abg auf und stromaufwärts vor dem Katalysator 16 tritt ein NOx-Massenstrom ms_NOx_vK auf.

Die Dosiervorrichtung 14 enthält ein Magnetventil 18 sowie einen Dosierventil-Temperatursensor 19.

Die Lufterfassung 12 stellt einem Steuergerät 20 ein Luftsignal ms_L, die Brennkraftmaschine 10 ein Drehsignal n und der Abgas-Temperatursensor 15 eine gemessene Abgastemperatur te_abg_Mes zur Verfügung.

Das Magnetventil 18 stellt dem Steuergerät 20 einen Spulen-Innenwiderstand Ri_Mes und der Dosierventil-Temperatursensor 19 eine gemessene Dosierventil-Temperatur te_V_Mes zur Verfügung.

Als Sensoren sind weiterhin ein Geschwindigkeitssensor 21, ein Fahrpedal 22 sowie ein Umgebungsluft-Temperatursensor 23 vorgesehen, wobei der Geschwindigkeitssensor 21 dem Steuergerät 20 eine gemessene Fahrgeschwindigkeit v_Mes, das Fahrpedal 22 eine Last Md und der Umgebungsluft-Temperatursensor die Umgebungsluft-Temperatur te_Lu zur Verfügung stellen.

Das Steuergerät 20 stellt einer Kraftstoff-Zumessvorrichtung 24 ein Kraftstoffsignal m_K und dem Magnetventil 18 ein Dosiersignal s_D zur Verfügung.

Das Steuergerät 20 enthält eine Größen-Ermittlung 30, welcher die Last Md, das Luftsignal ms_L sowie das Drehsignal n zur Verfügung gestellt werden und welche das Kraftstoffsignal m_K, eine berechnete Abgastemperatur te_Abg_Sim, einen berechneten Abgas-Massenstrom ms_Abg_Sim sowie einen berechneten NOx-Massenstrom ms_NOx_vK_Sim bereitstellt.

Das Steuergerät 20 enthält weiterhin eine Kühlanforderungs-Ermittlung 31, welcher der Spulen-Innenwiderstand Ri_Mes, die gemessene Dosierventil-Temperatur te_V_Mes, die Abgastemperatur te_Abg sowie die Last Md zur Verfügung gestellt werden und welche ein erstes Freigabesignal FG1 bereitstellt, das einer Auswahllogik 32 zur Verfügung gestellt wird.

Das Steuergerät 20 enthält weiterhin einen Geschwindigkeits-Vergleicher 33, der die Fahrgeschwindigkeit v_Mes mit einem nicht näher gezeigten Fahrgeschwindigkeit-Schwellenwert vergleicht und in Abhängigkeit vom Vergleichsergebnis ein zweites Freigabesignal FG2 der Auswahllogik 32 zur Verfügung stellt.

Das Steuergerät 20 enthält ferner eine Regenerations-Steuerung 34, welche der Auswahllogik 32 ein drittes Freigabesignal FG3 zur Verfügung stellt.

Vorgesehen ist weiterhin ein Temperatur-Vergleicher 35, welcher die Umgebungsluft-Temperatur te_Lu mit einem nicht näher bezeichneten Umgebungsluft-Temperatur-Schwellenwert vergleicht und in Abhängigkeit vom Vergleichsergebnis der Auswahllogik 32 ein viertes Freigabesignal FG4 zur Verfügung stellt.

Die Auswahllogik 32 stellt einer Dosiersignal-Ermittlung 36 ein Kühlsignal 37 zur Verfügung, welche ihrerseits das Dosiersignal s_D zur Ansteuerung des Dosierventils 18 bereitstellt. Das Dosiersignal s_D wird einer Freigabesignal-Ermittlung 38 zur Verfügung gestellt, welche der Auswahllogik 32 ein fünftes Freigabesignal FG5 zur Verfügung stellt. Die Freigabesignal-Ermittlung 38 erhält weiterhin das Kühlsignal 37 zur Verfügung gestellt.

Erfindungsgemäß wird folgendermaßen vorgegangen:

Zum Schutz vor einer Übertemperatur des Dosierventils 18 ist eine Kühlung des Dosierventils 18 dadurch vorgesehen, dass in Dosierpausen der normalen Dosierung bedarfsweise eine gezielt festgelegte Minimalmenge zu Kühlung des Dosierventils dosiert wird. Der Bedarf ist gegeben, wenn zumindest ein Maß für die Temperatur des Dosierventils 18 einen vorgegebenen Temperatur-Schwellenwert überschreitet. Hierbei ist die Minimalmenge auf einen Wert festzulegen, der einerseits ausreicht, die gewünschte Kühlwirkung zu erreichen. Andererseits muss darauf geachtet werden, dass ein Reagenzmittelschlupf am Ende des Abgasbereichs 13 möglichst vermieden oder zumindest minimiert wird. Ein solcher Reagenzmittelschlupf könnte auftreten, wenn als Katalysator ein SCR-Katalysator vorgesehen ist, dessen Reagenzmittel-Füllstand bei einer Kühlanforderung bereits den maximalen Füllstand aufweist. Anhand von Experimenten konnte gezeigt werden, dass bei einer Minimalmenge, die kleiner als beispielsweise 10 % der maximalen Dosiermenge ist, einerseits eine ausreichend hohe Kühlwirkung erzielt werden kann und andererseits ein nennenswerter Reagenzmittelschlupf dennoch nicht festzustellen ist.

Zunächst ist sicherzustellen, dass die Dosiersignal-Festlegung 36 das Dosiersignal s_D nicht in Abhängigkeit von nicht näher bezeichneten Eingangssignalen im Rahmen des normalen Dosierbetriebs auf einen bestimmten Wert beispielsweise in Abhängigkeit vom Stromaufwärts-NOx-Massenstrom ms_NOx_vK bzw. in Abhängigkeit vom berechneten Stromaufwärts-NOx-Massenstrom ms_NOx_vK_Sim festlegt.

Hierzu ist die Freigabesignal-Ermittlung 38 vorgesehen, welche das Auftreten eines Dosiersignals s_D in Abhängigkeit von einem vorliegenden Kühlsignal 37 überwacht. Wenn ein Dosiersignal s_D ohne Kühlsignal 37 vorliegt, sperrt das fünfte Freigabesignal FG5 die Auswahllogik 32, sodass die Auswahllogik 32 ein gegebenenfalls auszugebendes Kühlsignal 37 unterdrückt. Es findet ohnehin eine Dosierung des Reagenzmittels oder einer Vorstufe des Reagenzmittels statt.

Das Reagenzmittel kann beispielsweise Ammoniak sein, das als Reduktionsmittel in einem SCR-Katalysator 16 wirkt. Das Ammoniak kann beispielsweise aus einer zu dosierenden Harnstoff-Wasser-Lösung als Vorstufe des Reagenzmittels gewonnen werden. Das Reagenzmittel kann weiterhin beispielsweise ein oxidierbares Material wie beispielsweise Kohlenwasserstoffe sein, das auf einer katalytisch wirkenden Schicht entweder im Katalysator 16 oder im Partikelfilter 17 exotherm zum Beheizen des Abgases bzw. des Katalysators 16 und/oder des Partikelfilters 17 reagiert.

Das Kühlsignal 37 kann die Dosiersignal-Festlegung 36 aufgrund des fünften Freigabesignals FG5 nur zu Bereitstellung eines der Minimalmenge entsprechenden Dosiersignals s_D beaufschlagen, wenn eine Dosierpause im Rahmen der normalen Dosierung stattfindet.

Die Kühlanforderungs-Ermittlung 31 ermittelt das erste Freigabesignal FG1 in Abhängigkeit vom Spulen-Innenwiderstand Ri_Mes des Magnetventils 18 und/oder der vom Dosierventil-Temperatursensor 19 gemessenen Dosierventil-Temperatur te_V_Mes und/oder der Abgas-Temperatur te_Abg und/oder der Last Md.

Die Abgastemperatur te_Abg kann vom Abgas-Temperatursensor 15 gemessen werden, der die gemessene Abgas-Temperatur te_Abg_Mes bereitstellt. Der Abgas-Temperatursensor 15 kann entfallen, wenn die von der Größen-Ermittlung 30 berechnete Abgastemperatur te_Abg_Sim zumindest als Maß für die Abgastemperatur te_Abg herangezogen wird.

Das Fahrpedal 22 ist vorzugsweise in einem nicht näher gezeigten Kraftfahrzeug angeordnet, wobei die Fahrpedalstellung die Last Md der Brennkraftmaschine 10 wenigstens näherungsweise widerspiegelt.

Die genannten Eingangsgrößen der Kühlanforderungs-Ermittlung 31 spiegeln einzelnen oder in einer beliebigen Kombination zumindest ein Maß für die Temperatur im Bereich der Dosiervorrichtung 14 bzw. des Dosierventils 18 wider. Durch Vergleich mit einem Temperatur-Schwellenwert, welchen das Dosierventil 18 nicht übersteigen sollte, wird entschieden, ob das erste Freigabesignal FG1 bereitgestellt wird. Sofern der Temperatur-Schwellenwert überschritten ist, veranlasst das erste Freigabesignal FG1 die Auswahllogik 32 zur Bereitstellung des Kühlsignals 37, welches weiterhin die Dosiersignal-Festlegung 36 veranlasst, das der Minimalmenge entsprechende Dosiersignal s_D zum Kühlen des Dosierventils 18 bereitzustellen.

Das zweite Freigabesignal FG2, welches der Geschwindigkeits-Vergleicher 33 in Abhängigkeit von der Fahrgeschwindigkeit v_Mes des Kraftfahrzeugs bereitstellt, kann dazu herangezogen werden, die Ausgabe des Kühlsignals 37 nur bei Fahrgeschwindigkeiten zuzulassen, die unterhalb eines Fahrgeschwindigkeit-Schwellenwerts liegen. Sofern höhere Fahrgeschwindigkeit vorliegen, kann davon ausgegangen werden, dass der Fahrtwind zu einer ausreichenden Kühlung des Dosierventils 18 beitragen kann.

Das dritte Freigabesignal FG3, welches die Regenerations-Steuerung 34 bereitstellt, kann dazu herangezogen werden, die Ausgabe des Kühlsignals 37 nur dann zuzulassen, wenn eine Regeneration eines als Speicherkatalysator realisierten Katalysators 16 und/oder des Partikelfilters 17 stattfindet, da die Regeneration im Allgemeinen mit einer stark erhöhten Betriebstemperatur des Katalysators 16 bzw. des Partikelfilters 17 verbunden ist, die sich in Abhängigkeit von den baulichen Gegebenheiten auch auf das Dosierventil 18 auswirken kann.

Das vierte Freigabesignal FG4, welches der Temperatur-Vergleicher 35 in Abhängigkeit von der vom Umgebungsluft-Temperatursensor 23 gemessenen Umgebungsluft-Temperatur te_Lu bereitstellt, kann ebenfalls dazu herangezogen werden, die Ausgabe des Kühlsignals 37 nur dann zuzulassen, wenn die Umgebungs-Temperatur einen vorgegebenen Schwellenwert überschreitet. Sofern dies nicht der Fall ist, kann davon ausgegangen werden, dass die kühle Umgebungsluft bereits ausreicht, die erforderliche Kühlwirkung für das Dosierventil 18 bereitzustellen.

Das erste bis vierte Freigabesignal FG1, FG2, FG3, FG4 können sowohl einzeln als auch in Kombination in der Auswahllogik 32 berücksichtigt werden. Beispielsweise kann vorgesehen sein, dass das erste Freigabesignal FG1 nur dann zur Ausgabe des Kühlsignals 37 führt, wenn gleichzeitig das zweite Freigabesignal FG2 eine geringe Fahrgeschwindigkeit, das dritte Freigabesignal FG3 eine stattfindende Regeneration und das vierte Freigabesignal FG4 eine hohe Lufttemperatur signalisieren. Sinnvolle Unterkombinationen können ebenfalls in der Auswahllogik 32 berücksichtigt werden. Im Extremfall kann bereits ein einziges Freigabesignal FG1, FG2, FG3, FG4 dazu herangezogen werden, das Kühlsignal 37 bereitzustellen oder zu unterdrücken.

## Patentansprüche

1. Verfahren zum Betreiben eines in einem Abgasbereich (13) einer Brennkraftmaschine (10) zur Dosierung eines Reagenzmittels oder einer Vorstufe des Reagenzmittels angeordneten Dosierventils (18), bei welchem zum Vermeiden einer Übertemperatur eine Kühlung vorgesehen ist, wobei in Dosierpausen der normalen Dosierung bedarfsweise eine gezielt vorgegebene Minimalmenge zur Kühlung des Dosierventils (18) dosiert wird, **dadurch gekennzeichnet, dass** die Minimalmenge nur dosiert wird, wenn das Fahrzeug, in welchem die Brennkraftmaschine (10) als Antriebsmotor eingesetzt ist, eine Minimalgeschwindigkeit unterschreitet.

2. Verfahren nach Anspruch 1, **dadurch gekennzeichnet, dass** die Minimalmenge nur dosiert wird, wenn eine Regeneration eines Speicherkatalysators (16) und/oder eines Partikelfilters (17) stattfindet.

3. Verfahren nach Anspruch 1, **dadurch gekennzeichnet, dass** die Minimalmenge nur dosiert wird, wenn die Umgebungs-Temperatur (te_Lu) einen Umgebungstemperatur-Schwellenwert überschreitet.

4. Verfahren nach Anspruch 1, **dadurch gekennzeichnet, dass** die Minimalmenge nur dosiert wird, wenn ein Maß für die Dosierventil-Temperatur einen Dosierventiltemperatur-Schwellenwert überschreitet.

5. Verfahren nach Anspruch 4, **dadurch gekennzeichnet, dass** das Maß für die Dosierventil-Temperatur in Abhängigkeit von wenigstens einer Betriebsgröße (Md) der Brennkraftmaschine (10) und/oder einer Kenngröße (te_Abg) des Abgases ermittelt wird.

6. Verfahren nach Anspruch 4, **dadurch gekennzeichnet, dass** als Maß für die Dosierventil-Temperatur eine gemessene Dosierventil-Temperatur (te_V_Mes) herangezogen wird.

7. Verfahren nach Anspruch 4, **gekennzeichnet**, dass das Maß für die Dosierventil-Temperatur in Abhängigkeit von einem Spulen-Innenwiderstand (Ri_Mes) des als Magnetventil realisierten Dosierventils (18) ermittelt wird.

8. Verfahren nach Anspruch 1, **dadurch gekennzeichnet, dass** die Minimalmenge auf eine Menge festgelegt wird, die kleiner 10 % der maximalen, während des Dosierbetriebs einstellbaren Dosiermenge ist.

9. Vorrichtung zum Betreiben eines in einem Abgasbereich (13) einer Brennkraftmaschine (10) zur Dosierung eines Reagenzmittels angeordneten Dosierventils (18), bei welchem zur Vermeidung einer Übertemperatur eine Kühlung vorgesehen ist, **dadurch gekennzeichnet, dass** zumindest ein zur Durchführung des Verfahrens nach einem der Ansprüche 1 bis 8 hergerichtetes Steuergerät (20) vorgesehen ist.

10. Steuergerätprogramm, das alle Schritte eines Verfahrens nach einem der Ansprüche 1 bis 8 ausführt, wenn es in einem Steuergerät (20) abläuft.

11. Steuergerät-Programmprodukt mit einem auf einem maschinenlesbaren Träger gespeicherten Programmcode zur Durchführung des Verfahrens nach einem der Ansprüche 1 bis 8, wenn das Programm in einem Steuergerät (20) ausgeführt wird.

## Claims

1. Method for operating a dosing valve (18) which is arranged in an exhaust-gas region (13) of an internal combustion engine (10) for dosing a reagent or a precursor of the reagent and in which cooling is provided to avoid an excess temperature, with a purposely predefined minimal quantity being dosed as required in order to cool the dosing valve (18) in dosing intervals of the normal dosing, **characterized in that** the minimal quantity is dosed only if the vehicle in which the internal combustion engine (10) is used as a drive engine falls below a minimum speed.

2. Method according to Claim 1, **characterized in that** the minimal quantity is dosed only if a regeneration of a storage catalytic converter (16) and/or of a particle filter (17) takes place.

3. Method according to Claim 1, **characterized in that** the minimal quantity is dosed only if the ambient temperature (te_Lu) exceeds an ambient temperature threshold value.

4. Method according to Claim 1, **characterized in that** the minimal quantity is dosed only if a measure for the dosing valve temperature exceeds a dosing valve temperature threshold value.

5. Method according to Claim 4, **characterized in that** the measure for the dosing valve temperature is determined as a function of at least one operating variable (Md) of the internal combustion engine (10) and/or as a function of a characteristic variable (te_Abg) of the exhaust gas.

6. Method according to Claim 4, **characterized in that** a measured dosing valve temperature (te_V_Mes) is taken into consideration as a measure for the dosing valve temperature.

7. Method according to Claim 4, **characterized in that** the measure for the dosing valve temperature is determined as a function of a coil internal resistance (Ri_Mes) of the dosing valve (18) which is realized as a solenoid valve.

8. Method according to Claim 1, **characterized in that** the minimal quantity is fixed at a quantity which is less than 10% of the maximum dosing quantity which can be set during the dosing operation.

9. Device for operating a dosing valve (18) which is arranged in an exhaust-gas region (13) of an internal combustion engine (10) for dosing a reagent and in which cooling is provided to avoid an excess temperature, **characterized in that** at least one control unit (20) which is set up to carry out the method according to one of Claims 1 to 8 is provided.

10. Control unit program which carries out all the steps of a method according to one of Claims 1 to 8 when said control unit program is executed in a control unit (20).

11. Control unit program product having program code, which is stored on a machine-readable carrier, for carrying out the method according to one of Claims 1 to 8 when the program is executed in a control unit (20).

## Revendications

1. Procédé pour faire fonctionner une soupape de dosage (18) disposée dans une région de gaz d'échappement (13) d'un moteur à combustion interne (10) pour le dosage d'un agent réactif ou d'un précurseur de l'agent réactif, dans lequel, pour éviter une température excessive, on prévoit un refroidissement, une quantité minimale, prédéfinie de manière spécifique, pour le refroidissement de la soupape de dosage (18) étant ajoutée au besoin pendant des interruptions de dosage au cours du dosage normal, **caractérisé en ce que** la quantité minimale n'est ajoutée que lorsque le véhicule dans lequel le moteur à combustion interne (10) est utilisé en tant que moteur d'entraînement, est en dessous d'une vitesse minimale.

2. Procédé selon la revendication 1, **caractérisé en ce que** la quantité minimale n'est ajoutée que lorsqu'une régénération d'un catalyseur à accumulation (16) et/ou d'un filtre à particules (17) a lieu.

3. Procédé selon la revendication 1, **caractérisé en ce que** la quantité minimale n'est ajoutée que lorsque la température environnante (te_Lu) dépasse une valeur seuil de température environnante.

4. Procédé selon la revendication 1, **caractérisé en ce que** la quantité minimale n'est ajoutée que lorsqu'une mesure pour la température de la soupape de dosage dépasse une valeur seuil de température de soupape de dosage.

5. Procédé selon la revendication 4, **caractérisé en ce que** la mesure pour la température de la soupape de dosage est déterminée en fonction d'au moins une valeur de fonctionnement (Mol) du moteur à combustion interne (10) et/ou d'une valeur caractéristique (te_Abg) des gaz d'échappement.

6. Procédé selon la revendication 4, **caractérisé en ce que** l'on utilise comme mesure pour la température de la soupape de dosage une température de soupape de dosage mesurée (te_V_Mes).

7. Procédé selon la revendication 4, **caractérisé en ce que** la mesure pour la température de la soupape de dosage est déterminée en fonction d'une résistance interne d'une bobine (Ri_Mes) de la soupape de dosage (18) réalisée sous forme d'électrovanne.

8. Procédé selon la revendication 1, **caractérisé en ce que** la quantité minimale est établie à une quantité qui est inférieure à 10% de la quantité de dosage maximale pouvant être ajustée pendant le fonctionnement de dosage.

9. Dispositif pour faire fonctionner une soupape de dosage (18) disposée dans une région de gaz d'échappement (13) d'un moteur à combustion interne (10) pour le dosage d'un agent réactif, dans lequel, pour éviter une température excessive, on prévoit un refroidissement, **caractérisé en ce qu'**au moins un appareil de commande (20) approprié est prévu pour mettre en oeuvre le procédé selon l'une quelconque des revendications 1 à 8.

10. Programme d'appareil de commande exécutant toutes les étapes d'un procédé selon l'une quelconque des revendications 1 à 8, lorsqu'il tourne dans un appareil de commande (20).

11. Produit de programme d'appareil de commande comprenant un code programme mémorisé sur un support lisible par machine, pour mettre en oeuvre le procédé selon l'une quelconque des revendications 1 à 8, lorsque le programme est exécuté dans un appareil de commande (20).
